# EUROPEAN PATENT APPLICATION

(11) **EP 4 807 478 A1**
(43) Date of publication of application: **16.09.2026**
(21) Application number: 26163610.4
(22) Date of filing: 10.03.2026
(51) Int. Cl.: G05B 23/02

(54) **SYSTEMS AND METHODS FOR PREDICTIVE MAINTENANCE USING FEDERATED SURROGATE MODELS AND LARGE LANGUAGE MODELS**

(30) Priority: 10.03.2025 US 202563769550 P; 20.06.2025 US 202519243986
(71) Applicant: The Boeing Company, Arlington, VA 22202 (US)
(72) Inventor: BELLEMARE-DAVIS, Alexander, Arlington, 22202 (US); KOST-STEPHENSON, DANIEL PAUL, Vancouver, BC (CA); SWART, STEPHEN DAVID, Maple Ridge, BC (CA); LE, ANH, Vancouver, BC (CA)
(74) Representative: Plasseraud IP

(57) **Abstract**

A predictive maintenance system and method for predictive maintenance of an aircraft system using machine learning-based models includes accessing privately stored data for a plurality of clients from a central server. A surrogate model can be applied to the privately stored data to identify one or more anomalies within the privately stored data and/or a large language model (LLM) can be applied to the privately stored data to identify one or more records within the privately stored data associated with a component of an aircraft system. The method includes determining a relationship between the one or more anomalies and the one or more records within the privately stored data to predict operational anomalies of the aircraft system.

## Description

### FIELD OF THE DISCLOSURE

The present disclosure relates to predictive maintenance technologies, specifically to the use of machine learning-based surrogate models and large language models within federated data for anomaly detection and prognostics in complex systems such as aircraft.

### DESCRIPTION OF THE ART

In the aviation industry, predictive maintenance can be used to ensure the reliability and safety of aircraft by predicting potential failures before the failures occur. Data from various sensors and systems on the aircraft are collected and analyzed to identify patterns, trends, and anomalies associated with an impending failure. Predictive maintenance systems in aviation can monitor a wide range of parameters such as engine performance, hydraulic systems, electrical systems, environmental conditions, etc.

Federated machine learning is an enabling technology in cases where users desire the benefits of artificial intelligence (AI) without disclosing sensitive data. In telemetry-based predictive maintenance systems, federated machine learning can open an inimitable market advantage, enabling the benefit of pooled data without the security or privacy risk of sharing the sensitive data.

However, federating machine learning models by itself only makes more data available. The data must be filtered to relevance to the problem that the proposed model is trying to solve. This could mean filtering the data for predictive variables on which predictions will be based, and the target variables of the data to be predicted.

The purpose of federating a prognostic model is to search for a correlation between two proposed events, such as an occurrence in the signal data that may foreshadow an occurrence in the maintenance or fault data, which is challenging. Given a global data pool, an analyst could pick out target events from maintenance records, reading the narratives and labeling the records that describe the precise failure mode on a specific component of interest. The expert would subsequently correlate these events against trends or features in signal data that the expert hypothesized might foretell those events. In the absence of a global data pool, an expert instead must submit a model to identify the records and that pre-defines the signal feature of interest, such as an exceedance, anomaly, or deviation from expected normal behavior.

However, as different operators operate differently in different environments, those anomalies become difficult to define in general terms, especially without the benefit of seeing the raw data the other operators have contributed to the global data pool. Federated machine learning can only contribute to the data pool. Other models must be applied to the global data to identify relevant records that may be used for predictive maintenance.

Known federated machine learning solutions rely on conventional target variable models that will, however, select all records of unscheduled removals of a given part of an aircraft. However, this approach assumes that all such part removals were motivated by the same failure mode condition, which is often untrue. Other alternative models may be driven by maintenance computer faults or keyword searches, all of which suffer from a similar limitation. Federated machine learning solutions relying on conventional predictive variable models will attempt to find a correlation between the flawed target events and exceedances or trend events that are hypothesized to be relevant based on a smaller data set specific to a single operator. As soon as one attempts to federate this modeling approach, it is likely to fail because the exceedance or trend for one operation is likely to be different in another operational context, especially for systems that are sensitive to operational differences. A model that presumes that a threshold exceedance (such as a temperature spike) defines a predictive event that, when federated across two operators that operate in two different climates, will return a threshold that averages the exceedances of those participating operators, returning a result that under-performs for both instead of optimizing for both.

As a result, there is a pressing need for more efficient and adaptable methods that can leverage the vast amounts of privately stored data to predict system behavior and maintenance needs with greater accuracy and less computational overhead.

### BRIEF SUMMARY

In one example, a method for predictive maintenance of an aircraft system using machine learning-based models is provided. The method involves accessing privately stored data for a plurality of clients from a central server. A surrogate model can be applied to the privately stored data to identify one or more anomalies within the privately stored data and/or a large language model (LLM) can be applied to the privately stored data to identify one or more records within the privately stored data associated with a component of an aircraft system. The method includes determining a relationship between the one or more anomalies and the one or more records within the privately stored data to predict operational anomalies of the aircraft system.

In another example, a predictive maintenance system for predictive maintenance in an aircraft system using machine learning-based models is provided. The predictive maintenance system includes a control unit having one or more processors that access privately stored data from a plurality of clients within a central server. The control unit can apply a surrogate model to the privately stored data to identify one or more anomalies within the privately stored data. The surrogate model can process the privately stored data to predict maintenance needs by identifying the one or more anomalies and deviations from expected operational behavior of the aircraft system. The control unit can apply a large language model (LLM) to the privately stored data to identify one or more records within the privately stored data associated with a component of the aircraft system. The control unit determines a relationship between the one or more anomalies and the one or more records within the privately stored data to predict operational anomalies of the aircraft system.

In another example, a method for predicting maintenance of an aircraft system using machine learning-based surrogate models and large language models (LLMs) is provided. The method involves accessing privately stored data for a plurality of clients within a central server. A surrogate model is applied to the privately stored data to identify one or more anomalies within the privately stored data. The surrogate model processes the privately stored data to predict maintenance needs by identifying the one or more anomalies and deviations from expected operational behavior of the aircraft system. The large language model (LLM) is applied to the privately stored data to identify one or more records within the privately stored data associated with a component of the aircraft system. A relationship between the one or more anomalies identified by the surrogate model and the one or more records within the privately stored data identified by the LLM is determined to predict operational anomalies of the aircraft system.

The method also involves obtaining sensed data associated with one or more real-time operating conditions of the component of the aircraft system from one or more sensors. The sensed data can be analyzed based at least in part on the relationship between the one or more anomalies within the privately stored data and the one or more records within the privately stored data to identify one or more anomalies in the sensed data. An anticipated failure time of the component of the aircraft system is determined responsive to identifying the one or more anomalies in the sensed data.

### BRIEF DESCRIPTION OF THE DRAWINGS

Figure 1 illustrates one example of a predictive maintenance system.
Figure 2 illustrates one example of a system for training an integrated model.
Figure 3 illustrates one example of a surrogate model training system.
Figure 4 illustrates one example of a large language model training system.
Figure 5 illustrates one example of a predictive maintenance system.
Figure 6 illustrates a flowchart of one example of a method of predicting anomalies of a powered system.

### DETAILED DESCRIPTION

The foregoing summary, as well as the following detailed description of certain examples will be better understood when read in conjunction with the appended drawings. As used herein, an element or step recited in the singular and preceded by the word "a" or "an" should be understood as not necessarily excluding the plural of the elements or steps. Further, references to "one example" are not intended to be interpreted as excluding the existence of additional examples that also incorporate the recited features. Moreover, unless explicitly stated to the contrary, examples "comprising" or "having" an element or a plurality of elements having a particular condition can include additional elements not having that condition.

In the realm of aircraft maintenance, predictive maintenance has emerged as an approach to ensuring the reliability and safety of aircraft systems. Traditional methods of maintenance often rely on scheduled inspections and reactive repairs, which can lead to failures and costly downtime. These conventional approaches are typically based on historical data and predefined maintenance schedules, which may not accurately reflect the current state of an aircraft's systems. As a result, there is a growing need for more advanced techniques that can predict potential failures before they occur, allowing for timely interventions and minimizing operational disruptions.

Federated machine learning models offer users the benefit of accessing global sets of data while the sensitive data remains secure. While the federated machine learning models are arranged to make more data available to a community of common users, the excess data still requires filtering to be of use for predictive maintenance analysis. For example, global data needs to be filtered for predictive variables (e.g., signal data, signal features, text features, etc.) on which prediction analysis will be based, and for target variables (e.g., the particular data that is to be predicted).

The present method and predictive maintenance systems address these challenges by providing a specific combination of technologies where any one of these technologies on their own fail to deliver on its full potential. Historically, federated machine learning federates a single model learning the relationship between a well-defined set of predictive variables and a well-defined set of target variables (such as in smartphone use). The present methods are distinct from these known applications in that the methods are federating a system of models. For example, the methods are federating i) a model that identifies the intended predictive signal and/or text features (which may vary slightly among individual data sets); ii) a model that identifies the intended target signal and/or text features (which may vary slightly among individual data sets); and iii) a model that attempts to measure the relationship between the (i) and (ii) variable sets.

The method for predictive maintenance in aircraft systems by federating machine learning-based surrogate models and large language models introduces a novel approach to anomaly detection and maintenance scheduling. For example, the surrogate model-base prognosis, when federated, identifies anomalous system behavior regardless of the specific operational differences and environments. For example, if brake temperature during landings may help predict brake failures, it may be very difficult to spot (e.g., using conventional prediction methods) anomalously high brake temperatures in different weather systems, different landing speeds, and brake different brake settings at different airports. However, a surrogate model ingesting dozens to hundreds of contributing inputs from a global set of data can accurately predict the temperature of healthy brakes to within 2 degrees. A federated surrogate model can now predict the braking temperatures of all 787 aircrafts in all participating customer fleets and identify unexplained temperature spikes in excess of regular error. This means that federating the surrogate model can automatically generalize the signal model across all fleets.

Furthermore, a language-based target model, using customized issue classifiers when federated, identifies maintenance records fitting the description of the failure mode on the desired component, regardless of differences in vocabulary, spelling and misspellings, etc. For example, the language-based target model can recognize that records referring to "handmike," "hand mic," "intercom," "interphone," "PA shandset," etc., all refer to the same cabin communication system. The language-based target model can also recognize that "#1 ENG WONT START," "AUTOSTART FAIL LH ENGINE," "ENGINE STARTER FAIL," etc., all refer to the same failure mode on the engine starter. Without a human needing to review, and without elaborate keyword search logic, the language-based model can identify relevant targets by semantic meaning.

The predictive systems and methods described herein provide a solution of federating the machine learning-based surrogate model and the language-based target model, allowing the two modeling approaches to reach full potential, generalizing prognostics to multiple operations, all without needing to compromise sensitive data. This approach offers several advantages over traditional methods. Firstly, the method allows for the identification of intended predictive features within a large collection of data under a wide variety of variations in environmental conditions and/or operations of the aircraft system. Secondly, the method allows for the identification of records within the large collection of data using language models regardless of differences in vocabularies or misspellings, and without elaborate keyword search logic. Finally, the predictive systems and methods combines the additional technologies (e.g., aviation domain-specific large language models and surrogate model prognostics) with federated machine learning models to unlock the potential of federated machine learning in predictive maintenance, by federating target variable models and predictive variable models in order to find relevant data in a global data set.

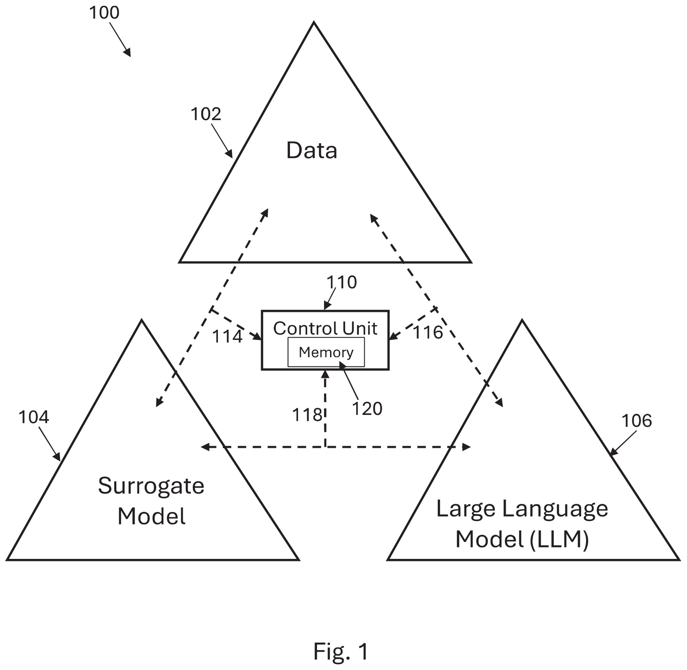

Figure 1 illustrates a schematic of a predictive maintenance system 100. The maintenance system 100 may be used to predict behavior and unreliability events of a powered system, such as an aircraft system. The unreliability events may include failure events, such as when a component of the powered system failed to operate properly or as intended, when a subsystem associated with the powered system failed to operate properly, when a structural element of the powered system failed, etc. As another example, the unreliability events may be determined based on a component and/or subsystem failing to function according to a standard, such as a governmental standard specified by the Federal Aviation Administration (FAA). As another example, the unreliability events may be based on individual standards that may be determined by an owner or operator of the powered system.

The predictive maintenance system 100 includes a control unit 110 having one or more processors that can represent hardware circuitry that includes and/or is connected with various types of processors, each suited to handle complex computations required for real-time data processing and machine learning tasks. Examples of different types of processors that the control unit 110 can represent include one or more central processing unit (CPU), graphics processing units (GPU), field-programmable gate arrays (FPGA), application-specific integrated circuits (ASIC), digital signal processors (DSP), tensor processing units (TPU), or the like. The control unit can utilize these processors to execute various algorithms and manage data flow as described herein. The control unit 110 includes a memory 120 (or other data storage machine) that can include one or more types of storage such as RAM, hard drives, SSDs, flash memory, etc. The memory 120 may contain some local data privately stored by the control unit 110.

In one example, the control unit 110 represents an artificial intelligence, machine learning, or artificial neural network system that can access privately stored data 102 from a central server and that trains one or more surrogate models 104 and one or more large language models (LLM) 106. The predictive maintenance system 100 may be referred to as a predictive pyramid or pyramid maintenance system in that the control unit 110 may rely on two or more elements of the pyramid (e.g., the privately stored data 102 of a central server, the surrogate model 104, or the LLM 106) in order to predict behavior of an aircraft system (or another powered system) under a wide variety of variations in environmental conditions and/or operations of the aircraft system.

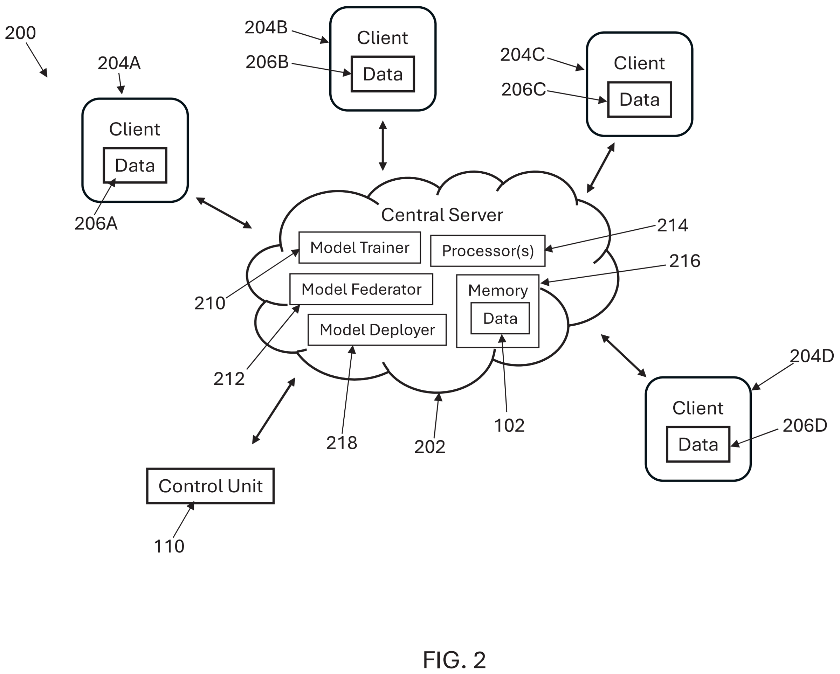

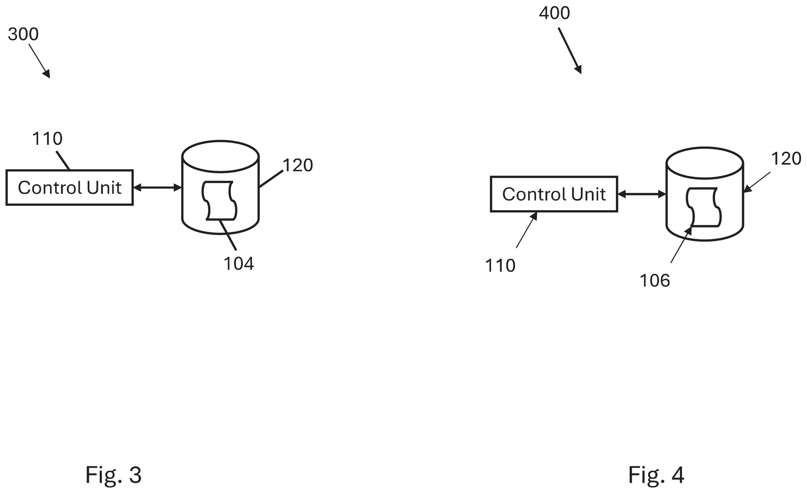

The system 100 integrates multiple modules that work in concert to emulate the operation of aircraft systems, aircraft devices/components, etc., compare predicted outputs with actual outcomes, and identify potential anomalies. In one example, the control unit 110 may rely on the privately stored data 102 and one or more surrogate models 104 to analyze a first data set 114. In another example, the control unit 110 may rely on the privately stored data 102 and the LLM 106 to analyze a second data set 116. In another example, the control unit 110 may rely on the surrogate models 104 and the LLM 106 to analyze a third data set 118. In another example, the control unit 110 may rely on the privately stored data 102, the surrogate models 104, and the LLM 106 to analyze another set of data. Details associated with the privately stored data 102 may be described herein with reference to Figure 2. Details associated with the training of the surrogate model 104 may be described herein with reference to Figure 3. Details associated with training of the LLM 106 may be described herein with reference to Figure 4.

The control unit 110 operates as a central hub for processing and analysis, coordinating activities of various modules within the system 100. The control unit 110 can be responsible for executing the machine learning algorithms that power the surrogate model 104 and/or the LLM 106, enabling the surrogate model 104 and the LLM 106 to process sensor data associated with operation of the aircraft system and to analyze the privately stored data 102 of a central server and predict operational anomalies of the aircraft system. In one example, the control unit 110 interfaces with one or more sensors on the aircraft system to receive real-time data and utilizes this data to train and refine the surrogate model 104 and the LLM 106. The control unit 110 is equipped with computational resources necessary to handle the complex calculations involved in predictive maintenance, ensuring that the system 100 can operate efficiently and effectively in real-time.

Figure 2 illustrates a system 200 for training an integrated model. The system 200 includes a central server 202. The system 200 also includes the control unit 110 and plural clients 204A-D communicatively coupled with the central server 202. In the illustrated example, four clients are shown. However, any number of clients may be communicatively coupled with the central server 202 (e.g., ten clients, one hundred clients, one thousand clients, ten thousand clients, or the like).

Each client 204A-D and the control unit 110 privately stores data that is accessible by the central server 202. For example, the control unit 110 and each client 204A-D can privately store data 206A-D and provide selective access of the privately stored data 206A-D to the central server 202. In one example, each client can selectively upload data to the central server 202, and the central server 202 may securely store at least some of the privately stored data 102 (e.g., also shown in Figure 1) in a memory 216 on behalf of the client. For example, the securely stored data may be encrypted, may require credentials to access, or the like. In other examples, the central server 202 may not have access to decoded data values associated with at least some of the securely stored data. For example, the central server 202 may be employed as a data warehouse for numerous different clients, allowing each client to maintain their own data privately relative to each other client within the architecture of the system 200. The system 200 encourages the clients 204A-D and a client associated with the control unit 110 to actively participate in data submission, data sharing, and model training. Data and prospective models can be knowingly contributed by each client with permission for the system 200 to generate and train integrated models based on their contributions.

In one or more examples, the clients 204A-D and the client associated with the control unit 110 may be organizations within a common field, such as automotive, manufacturing, engineering, meteorology, medicine, telecommunications, finance, etc. As one example, the plurality of clients may represent airlines that employ common aircraft models, and the data stored by each client may have common characteristics that may allow for integrating the data into a larger cohort. Each airline (e.g., each client 204A-D) may operate in a unique environment relative to each other client. For example, aircraft owned or associated with client 204A may be exposed to a unique set of environmental conditions and operating conditions (e.g., high ambient temperatures, high levels of ambient humidity, with propulsion settings, brake settings, flight paths, interior cabin conditions, etc., to correspond with the higher ambient conditions) relative to environmental and/or operating conditions of aircraft own or associated with client 204B (e.g., lower ambient temperatures, low levels of ambient humidity, with different propulsion settings, brake settings, flight paths, interior cabin conditions, etc., to correspond with the lower ambient conditions).

In one or more examples, the central server 202 may offer services and/or have established data pipelines with their clients. The systems described herein may take advantage of this pre-existing architecture and set of digital relationships. Such arrangements may lend itself to subscription services. For example, data can be uploaded from each client 204A-D as part of a subscription model, or in response to a specific prompt, such as new models coming online to the central server 202.

In the illustrated example, the central server 202 includes a model trainer 210, a model federator 212, and a model deployer 218. The central server 202 also includes one or more processors 214 and the memory 216 (or other data storage machine). The processors 214 can be application-specific integrated circuits (ASICs), field-programmable gate arrays (FPGAs), digital signal processors (DSPs), and/or general-purpose processors (GPPs). The memory 216 can include one or more types of storage such as RAM, hard drives, SSDs, flash memory, etc. The memory 216 may contain some of the data 102 privately stored by the one or more clients 204A-D.

In one example, the model trainer 210 can be configured to train machine-learning models according to any suitable training procedure. Non-limiting examples of training procedures can include supervised training (e.g., using gradient descent or any other suitable optimization method), zero-shot, few-shot, unsupervised learning methods (e.g., classification based on classes derived from unsupervised clustering methods), reinforcement learning (e.g., deep Q learning based on feedback), or based on generative adversarial neural network training methods.

The model deployer 218 can package, compare, and/or develop interfaces for machine learning models before delivering models or posting models for retrieval by the clients 204A-D and/or the control unit 110. The model deployer 218 may deploy local models (e.g., models trained on data associated with a single client and/or single environment) as well as federated models (e.g., for the purpose of making predictions on new data). The model deployer 218 may push model files and/or indications of new or updated files to the clients. In one example, the model deployer 218 may evaluate different candidate models for a given problem (e.g., a failure issue associated with a system of an aircraft) and may disseminate the best performing model to the participating clients. The determination of which of the performing models is the best may be based on the amount of data used to train the candidate model, dates at which the data used to train the model was obtained, the number of different participating clients contributing some data to train the model, or some other evaluating factor.

The model federator 212 can combine several individual models into a single federated model. For example, the model federator 212 may receive two or more trained local models from two different clients, where each of the trained local models have been trained on existing private data of the respective clients. Each of the respective trained models reflects model attributes of the respective client by applying the local existing private feature data 206 to a feature mapper that maps the respective clients feature data to the trained local models. For example, the trained model attributes can include weights given to model variables and hidden layers in the neural network models. The trained local models can be a common analytical model across two or more clients, enabling federation of the models.

In one or more examples, the model federator 212 may generate an integrated, aggregate model by federating models from a grouping of similarly trained local models using federated learning techniques such as federated stochastic gradient descent, federated averaging, federated learning with dynamic regularization, dynamic aggregation, inverse distance aggregation, hybrid federated dual coordinate ascent, or the like. The model federator 212 may receive models of the similar client assets of a group, and, using federated learning techniques, may federate the plural models into a single aggregate model. The model federator 212 may use federated learning techniques to generate an amalgamation of the plural models, resulting in a model that reflects a higher level of quality that is attained by applying a model to a larger set of feature data but without sharing or surrendering the respective sets of client feature data. For example, the privately stored data 102 of each of the clients 204A-D remains private from each of the other clients, while also being accessible to the central server 202 for the generation of the integrated model.

The central server 202 acts as a federated learning portal that allows clients 204A-D to submit candidate models for different problems. The candidate models can then be trained and federated across the separate environments of each participating client. Each of the participating clients may be notified of newly federated models, which they can then choose to deploy to their own environment. For example, the central server 202 provides a community benefit where clients can contribute their data without having to expose their own sensitive data to other clients.

Figure 3 illustrates a surrogate model training system 300 that may be used to train one or more of the surrogate models 104 shown in Figure 1. The control unit 110 may operate as a central hub for data processing and analysis, coordinating the activities of the various modules within the surrogate model training system 300. For example, the control unit 110 can be responsible for executing the machine learning algorithms that power the surrogate models 104, enabling the surrogate models 104 to process sensor data to predict operational outputs of one or more devices, components, or systems of the aircraft system and to predict maintenance needs of the aircraft system by identifying the anomalies and/or deviations from expected operational behavior of the aircraft system. In one example, the control unit 110 may interface with sensors on the aircraft system to receive real-time data and utilize the data to train and refine the surrogate models 104.

The memory 120 of the predictive maintenance system 100 can store the surrogate models 104 and/or data from sensors of the aircraft system. The memory 120 can represent various types of computer memory, such as read-only memory (ROM), flash memory, one or more solid-state drives (SSD), hard disk drives (HDD), network-attached storage (NAS), or the like.

In one or more examples, the control unit 110 may include one or more of a training module, a comparison module, an identification module, or the like. The one or more modules of the control unit 110, in the context of hardware, can refer to a distinct, self-contained unit within the control unit 110 that performs specific functions. The training module may focus on the development and refinement of the surrogate models 104. The training module can receive operational parameters from sensors of an aircraft system and use these parameters to train the surrogate models 104 to emulate, or be a surrogate for, the operational functions of aircraft devices, components, systems, etc. The operational parameters of the aircraft system may include, but are not limited to, temperatures, pressures, altitudes, airflows, measured vibrations, electric current, voltage measurements, or the like.

The training module can employ advanced machine learning techniques, such as recurrent neural networks (RNNs), long short-term memory (LSTM) networks, and transformers, to handle the time-series data from sensors on or coupled with an aircraft system. By continuously or repeatedly updating the surrogate models 104 with new sensor data, the training module can ensure that the surrogate models 104 remain accurate and capable of predicting operational outputs under varying conditions.

In one example, the collected sensor data can be preprocessed by the training module to clean and normalize the data to eliminate or reduce noise and inconsistencies within the data. The training module uses machine learning techniques to learn the complex relationships between the input parameters and the operational outputs of the aircraft devices and systems in the different flight profiles and operational conditions. During training, the surrogate models 104 are exposed to the data from diverse flight profiles and operational conditions. The surrogate models 104 learn to emulate the behavior of the aircraft devices and systems by adjusting parameters of the surrogate models 104 to minimize or reduce the difference between the predicted and actual outputs of the aircraft devices or systems. Once the surrogate models 104 are trained, the surrogate models 104 undergo validation and testing by the training module using a separate dataset, such as real-world data from the aircraft system, simulated data, or the like. This ensures that the models 104 can accurately predict operational outputs and identify deviations under various conditions. For example, the surrogate models 104 may be trained using feature importance techniques or Shapley values to identify most relevant signals in the data for predicting the operational outputs. The surrogate models 104 can be used to predict deviations from normal behavior of components and/or systems of an aircraft system based on the current conditions (e.g., operating conditions, environmental conditions, etc.) in which the aircraft system is currently operating. The surrogate models 104 can be repeatedly refined and retrained as new data becomes available. This ongoing process allows the models 104 to adapt to changes in operational conditions and improve the predictive accuracy of the models 104 over time.

In one example, the comparison module can compare predicted operational outputs with actual outputs from aircraft devices and/or systems. This module is important in identifying deviations that may indicate potential anomalies or faults. By analyzing the differences between predicted and actual outputs, the comparison module can detect discrepancies that suggest a maintenance need. The comparison module may utilize specified environmental conditions to distinguish between noise and actual anomalies, ensuring that the surrogate model 104 accurately identifies genuine issues that require attention.

In one example, the identification module can determine whether deviations identified by the comparison module are indicative of a maintenance need. The identification module may analyze the deviations in context of environmental and operational variations, distinguishing between noise and actual anomalies. For example, the surrogate models 104 may be trained to predict operational anomalies irrespective of changing operational variations and/or irrespective of changing environmental factors in which the aircraft system is operating. By considering factors such as temperature, humidity, altitude, and operational context, the identification module can accurately assess the significance of the deviations and decide whether the deviations warrant a maintenance alert. For example, the identification module can help to ensure that the predictive maintenance system 100 only generates alerts for genuine maintenance needs, reducing or minimizing false positives and unnecessary interventions.

Figure 4 illustrates a large language model (LLM) training system 400 that is used to train the large language model (LLM) 106 shown in Figure 1. The control unit 110 can provide inputs to the LLM 106 of the predictive pyramid maintenance system 100. The LLM 106 may be a model stored in the memory 120 or in another tangible and non-transitory computer readable storage medium.

The LLM 106 can be trained to identify the context of an input from an operator device (not shown). For example, the LLM 106 may receive inputs of messages or keystrokes by an operator (e.g., inputting messages, keystrokes, audio commands, or the like, into an operator device). Based on these inputs received by the operator device, the LLM 106 may determine what information will assist the operator. For example, the LLM 106 can examine the inputs and decide that the operator is looking to retrieve records within the privately stored data, or within local data, maintenance logbook records, or the like, that may be associated with a particular component of an aircraft system, records associated with a particular type of aircraft system, records associated with a particular maintenance event associated with a component or system of the aircraft system, records associated with a failure event or an unreliability event of the component or system of the aircraft system, or the like.

The LLM 106 may be used to classify free text fields in maintenance logbook records associated with an aircraft system. As one example, the operator may be looking for records associated with auto-start failures of an engine starter on a particular type of aircraft. The inputs may include terms such as "auto-start," "777," "engine," "engine starter," or the like. The LLM 106 may also be trained to identify alternative phrases, terms, or other indications that would relate to the inputs but may be slightly different therefrom. For example, the LLM 106 may be trained and re-trained to locate records that are associated with the input terms as well as records that use alternative versions of the input terms, such as based on records that were manually input by different people, people that may be fluent in different languages, different short-hand terms or phrases, or the like.

Returning to Figure 1, the control unit 110 may rely on two or more of the privately stored data 102 of the central server 202, the surrogate model 104, or the LLM 106 in order to predict behavior of an aircraft system (or another powered system) under a wide variety of variations in environmental conditions and/or operations of the aircraft system.

The control unit 110 may access the privately stored data 102 to search for systems, components, structural elements, etc., of other aircraft systems (e.g., of the same type) to be correlated with systems, components, structural elements, etc., of the aircraft system. For example, the privately stored data 102 may be leveraged from a global fleet using federated learning. The control unit 110 may apply the surrogate models 104 to specify particular signal features to be identified (e.g., within the privately stored data 102) in order to leverage the privately stored data and predict target events. The surrogate models 104 may be used to identify anomalies within the privately stored data associated with system signal behavior to detect unexplained and/or unexpected behaviors. For example, the signal features may specify aircraft systems and/or particular components and/or systems associated with the aircraft systems (a cabin air pressure, a fuel-air mixture ratio, cabin pressures and/or temperatures, brake temperatures, the like) in order to search the privately stored data 102 for records associated with unexplained behaviors or deviations from normal behaviors associated with the related aircraft systems and/or components associated with the related aircraft systems. The LLM 106 may be used to identify records within the privately stored data 102 that may be related to specific failure conditions, specific aircraft subsystems, components, structural elements, etc.

One or both of the surrogate model 104 or the LLM 106 may be applied to the privately stored data 102 of the central server 202. As one example, the control unit 110 may rely on the privately stored data 102 and the surrogate models 104 to analyze the first data set 114. For example, the control unit 110 of the predictive maintenance system 100 may apply the surrogate model 104 on federated records (e.g., data records, available models, etc.) associated with the privately stored data 102 stored within the central server 202. In one example, the amount or state of local data associated with the aircraft system stored within the memory 120 may be insufficient to effectively predict an anomaly or unreliability event of the aircraft system, and instead the predictive maintenance system 100 may require additional data, such as the privately stored data 102, in predicting the anomaly or unreliability event, in predicting a maintenance event of the aircraft system, predicting a maintenance timeline associated with the aircraft system, or the like, with a greater level of accuracy relative to applying the surrogate models 104 only to the local data stored in the memory 120.

As another example, the control unit 110 may rely on the privately stored data 102 and the LLM 106 to analyze the second data set 116. For example, the control unit 110 may deploy the LLM 106 on the federated records associated with the privately stored data 102 stored within the central server 202. The LLM 106 may identify records within the privately stored data 102 based on the inputs received by the control unit 110.

In another example, the local data may include a sufficient amount of data or information (e.g., historical maintenance and/or event records, etc.) associated with the aircraft system to which the surrogate model 104 and/or the LLM 106 may be applied in order to effectively predict an anomaly or unreliability event of the aircraft system (e.g., a component, structural element, and/or system of the aircraft system). For example, the control unit 110 may not require the additional privately stored data 102 in the predictive maintenance analysis and may instead apply or deploy the surrogate model 104 and/or the LLM 106 on the local data associated with the aircraft system stored within the memory 120 to analyze the third data set 118.

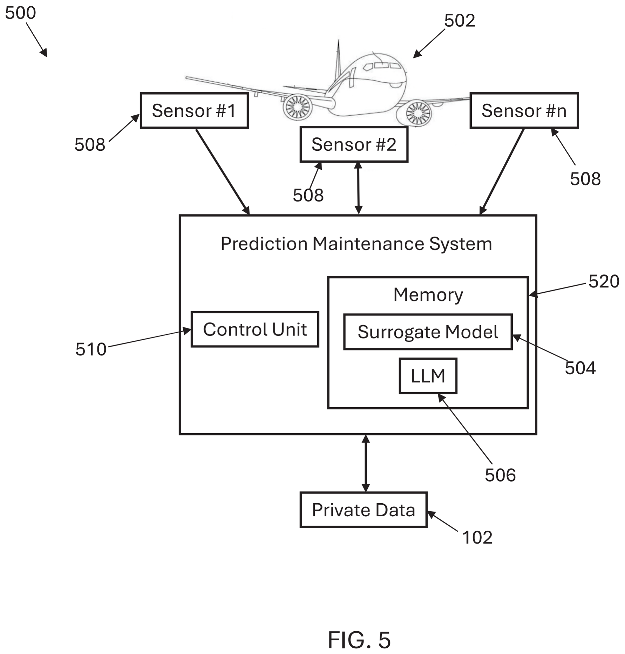

Figure 5 illustrates one example of a predictive maintenance system 500 of an aircraft system 502. The predictive maintenance system 500 can include various sensors 508 installed on the aircraft system 502. These sensors 508 can gather a wide range of parameters, such as temperature, pressure, altitude, air flow, vibrations, electrical current, and voltage, from different aircraft devices, components, systems, or the like. The data can be collected through a variety of different (e.g., diverse) flight profiles and operational conditions. For example, the data collected by the sensors 508 may be used to train the surrogate models 104, and may be collected during different flight plans for different aircraft systems 502, in different environmental conditions, or the like. A memory 520 in the predictive maintenance system 500 can store the surrogate models 504, the LLM 506, and/or the local data collected by the sensors 508.

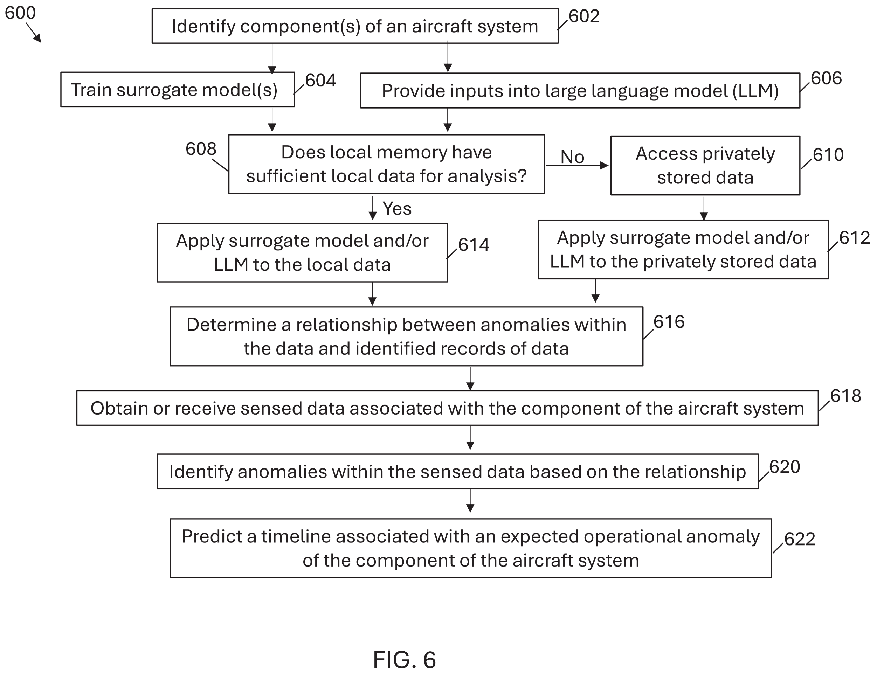

Figure 6 illustrates a flowchart of one example of a method 600 of predicting anomalies of a powered system, such as the aircraft system 502. The method 600 can provide for predictive maintenance in the aircraft system 502, utilizing machine learning-based surrogate models to enhance the detection of anomalies and the scheduling of maintenance events. The method 600 can process sensor data from the various sensors 508, enabling real-time monitoring and prediction of operational outputs of aircraft devices. The method 600 can represent operations performed by the predictive maintenance systems 100, 500.

Referring to Figures 5 and 6, at 602, one or more components or systems of the aircraft system 502 that may require predictive analysis, maintenance forecasting, failure analysis, or the like, may be identified. As one example, an operator may wish to conduct predictive analysis, maintenance forecasting, or failure analysis on a particular type of aircraft, on a particular component system within the aircraft system 502 (e.g., power command signals output by an engine control systems, an autothrottle system, an environmental control system, an auxiliary power unit controllers, a thrust management system, or the like), or the like.

At step 604, the one or more surrogate models 504 may be trained to emulate the operation of the aircraft system 502. The surrogate models 504 are machine learning-based constructs designed to replicate the behavior of specific aircraft devices, components, systems, etc., under various operational conditions. Training involves using historical and real-time sensor data to teach the models the complex relationships between different operational parameters and the expected outputs of the aircraft devices, components, systems, or the like. Advanced machine learning techniques, such as RNNs, LSTM networks, and transformers can be employed to handle the time-series nature of the sensor data. The trained surrogate model 504 can process additional sensor data to accurately predict the operational outputs of the aircraft system 502 when devices or systems of the aircraft system 502 are operating normally and/or not trending toward anomalies.

At 606, inputs are provided to the LLM 506 which may be trained based in part on the inputs and identified records that are located. The LLM 506 can be trained to identify text and/or records associated with events related to a particular failure, failure condition, maintenance event, or the like, related to the component or system of the aircraft system 502. The LLM 506 can be trained to identify the context of inputs, such as from an operator device. For example, the LLM 506 may receive inputs of messages or keystrokes by an operator (e.g., inputting messages, keystrokes, audio commands, or the like, into an operator device). Based on these inputs received by the operator device, the LLM 506 can examine the inputs and decide that the operator is looking to retrieve records, such as within maintenance logbook records, associated with a particular component of an aircraft system, records associated with a particular type of aircraft system, records associated with a particular maintenance event associated with a component or system of the aircraft system, or the like. The LLM 506 may be used to classify free text fields in maintenance logbook records associated with the aircraft system 502, in maintenance logbook records associated with other (e.g., similar) aircraft systems (e.g., aircrafts associated with the clients 204A-D illustrated in Figure 2), or the like.

At 608, a determination is made if the local memory 520 has sufficient local data (e.g., historical maintenance data, historical failure or unreliability data, or the like associated with the aircraft system 502) for a predictive maintenance analysis. As one example, the predictive analysis may be conducted on a system or component of the aircraft system 502 that rarely experiences failures, are rarely unreliable, etc. For example, the predictive analysis may be conducted on a spoiler power-control unit (PCU), which are rarely unreliable or fail at a frequency that is less than a frequency threshold (e.g., maintenance or failure occurs about once every 50 uses or flights; about once every 5000 uses or flights, about once every 5 years, about once every 10 years, about once every 25 years, or the like) or occur rarely within a fleet of aircraft (e.g., about one failure per every 1000 aircraft systems, about one failure per 10,000 aircrafts, etc.). If a number of failure or unreliability events and/or number of data records associated with the component being evaluated is below a determined threshold, the amount of local data records associated with the failure and unreliability events may be insufficient for conducting an accurate, proper, or thorough predictive analysis, and flow of the method may proceed toward 610.

Alternatively, the predictive analysis may be conducted on a component or system of the aircraft system 502 that experiences failure events more often (e.g., more frequently than the spoiler PCU). In which case, the amount of local data records associated with the failure and unreliability event stored within the memory 520 may be sufficient for conducting an accurate and thorough predictive analysis, and flow of the method may proceed toward 614.

At 610, privately stored data 102 stored within a central server may be accessed by the control unit 510. The privately stored data 102 may be stored within the central server 202 that may act as a federated learning portal allowing plural clients to store private data, store data that may be anonymously available to other clients, submit candidate models for different problems, or the like.

At 612, one or both of the surrogate models 504 or the LLM 506 are applied to the privately stored data. The surrogate models 504 may be applied to the privately stored data 102 to identify one or more anomalies within the privately stored data. The one or more anomalies within the privately stored data may indicate deviations from expected operational behavior of aircraft systems associated with the clients 204A-D. For example, the privately stored data 102 may include one or more instances of previous operational anomalies of another aircraft system associated with at least one of the clients 204A-D. The LLM 506 may be applied to the privately stored data 102 to identify one or more records within the privately stored data associated with a component or system of the aircraft system 502, such as the component identified at 602.

Alternatively, at 614, the surrogate models 504 and/or the LLM 506 are applied to the local data stored within the memory 520. The local data may be historical data associated with prior operations of the aircraft system 502, historical data associated with operations of other aircraft systems (e.g. common aircraft makes, models, etc.) within the same fleet, owned by the same organization, or the like. For example, the surrogate models 504 may be applied to the local data to identify one or more anomalies within the local data. The one or more anomalies within the local data may indicate deviations from expected operational behavior of the aircraft system 502 during previous operation of the aircraft system 502. The LLM 506 may be applied to the local data to identify one or more records within the local data associated with a component or system of the aircraft system 502, such as the component or system identified at 602.

At 616, a relationship is determined between anomalies within the data and the identified records of the data (e.g., the privately stored data 102 and/or the local data stored within the memory 520). The relationship may allow for the identification of text features, signal features, and/or artifacts within the telemetry data that allow the prediction of certain target events. For example, the relationship allows for analysis of the aircraft system 502 (or a fleet of aircraft systems) to predict maintenance events through health monitoring utilizing multiple data sets (e.g., privately stored and/or local) through connected and non-connected data paths.

At 618, the sensors 508 can monitor and obtain one or more operating conditions of the aircraft system 502. The operating conditions may include one or more operational parameters such as temperatures, pressures, altitudes, airflows, measured vibrations, electric current, voltage measurements, or the like. The sensors 508 can monitor signals conducted along buses, wires, cables, or the like, to read the actual sensed data. This ensures that the actual sensed data is being monitored in real time, or in a time series. In one example, the sensed data may be obtained by the sensors 508 for a predetermined number of uses of the aircraft system 502, a predetermined number of uses of certain systems or components of the aircraft system, or the like.

At 620, the control unit may examine the sensed data obtained by the sensors 508 in light of the relationship identified at step 616 to identify one or more anomalies within the sensed data. For example, the real-time operating conditions of the aircraft system 502 may be analyzed and/or examined based on the relationship between the anomalies within the data (e.g., the local data and/or the privately stored data 102) and the identified records of data (e.g., identified by the LLM 506 from the local data and/or the privately stored data 102). Based on the analysis, the control unit 510 may identify one or more anomalies within the sensed data obtained by the sensors 508. The control unit 510 may determine an anticipated failure time of the component of the aircraft system 502 responsive to identifying the anomalies within the real-time sensed data. The anticipated failure time may indicate an expectation for when the component of the aircraft system 502 is expected to fail, expected to start performing in an unreliable manner, or the like. For example, the control unit 510 may determine that the component may be expected to fail or be expected to perform in an unreliable manner after a determined number of uses of operation, after a determined length of time of continuous or semi-continuous use, after a number of days of use, a number of years of use, or the like.

At 622, the control unit 510 may determine a predicted timeline associated with an expected operational anomaly or an expected operational unreliability of one or more components and/or systems of the aircraft system 502. The timeline that is determined may be based in part on the analysis of the sensed data relative to the relationship determined at 616. In one example, the timeline may indicate the anticipated failure time of the component of the aircraft system 502, a recommended maintenance event occurring at a time prior to the anticipated failure time, a recommended usage rate (e.g. such as a recommendation to decrease the number of uses of the aircraft system 502 to delay the anticipated failure time), or the like.

In one example, the control unit 510 may generate a maintenance alert responsive to determining the anticipated failure time of the component of the aircraft system 502. The alert may prompt the scheduling of some maintenance activities for the aircraft system 502. Optionally, the alert may be generated based on a severity or a type of the anomalies that are identified. For example, the alert may include or be associated with a priority level at which the component and/or the aircraft system 502 is to be further examined, maintained, repaired, or the like. In one example, the maintenance alert, the anticipated failure time, and/or the timeline may be communicated with an operator of the aircraft system 502 (e.g., a pilot, an air-traffic control operator), maintenance systems and/or personal (e.g., managers, workers, maintenance scheduling systems, aircraft scheduling systems, etc.), or the like.

As used herein, the terms "software" and "firmware" are interchangeable, and include any computer program stored in a data storage unit (for example, one or more memories) for execution by a computer, including RAM memory, ROM memory, EPROM memory, EEPROM memory, and non-volatile RAM (NVRAM) memory. The above data storage unit types are exemplary only, and are thus not limiting as to the types of memory usable for storage of a computer program.

Referring to Figures 1-5, examples of the subject disclosure provide systems and methods that allow large amounts of data to be quickly and efficiently analyzed by a computing device. For example, the control unit 110 can receive and analyze the hundreds, thousands, millions, or more data and/or records that may be in the form of different types of modalities. The control unit 110 may also access and/or receive hundreds, thousands, millions, or more, technical specifications or publications, and may analyze the data associated with the real-time maintenance work being completed based on the technical specifications. As such, large amounts of data, which may not be discernable by human beings, are being tracked and analyzed. The vast amounts of data are efficiently organized and/or analyzed by the control unit 110, as described herein. The control unit 110 analyzes the data in a relatively short time in order to quickly and efficiently code, decode, and execute datalink messages. A human being would be incapable of efficiently analyzing such vast amounts of data in such a short time. As such, examples of the present disclosure provide increased and efficient functionality, and vastly superior performance in relation to a human being analyzing the vast amounts of data.

In at least one example, components of the system 100, such as the control unit 110, provide and/or enable a computer system to operate as a special computer system for monitoring and/or auditing maintenance, inspection, and/or repair work completed by a human operator. The control unit 110 improves upon standard computing devices by monitoring such work completed by an operator via multiple types of modality and automatically communicating with individuals (such as maintenance operators, managerial individuals, operators of aircraft, etc.) in an efficient and effective manner.

In at least one example, the processors of the control unit 110 can be an artificial intelligence or machine learning system. These types of systems may be trained from outside information and/or self-trained to repeatedly improve the accuracy with how data is analyzed. Over time, these systems can improve by determining such information with increasing accuracy and speed, thereby significantly reducing the likelihood of any potential errors. The AI or machine-learning systems described herein may include technologies enabled by adaptive predictive power and that exhibit at least some degree of autonomous learning to automate and/or enhance pattern detection (for example, recognizing irregularities or regularities in data), customization (for example, generating or modifying rules to optimize record matching), and/or the like. The systems may be trained and re-trained using feedback from one or more prior analyses of the data, ensemble data, and/or other such data.

Based on this feedback, the systems may be trained by adjusting one or more parameters, weights, rules, criteria, or the like, used in the analysis of the same. This process can be performed using the data and ensemble data instead of training data, and may be repeated many times to repeatedly improve the monitoring and auditing performed by the control unit 110. The training minimizes conflicts and interference by performing an iterative training algorithm, in which the systems are retrained with an updated set of data (for example, data received during multiple different maintenance events of a common aircraft 502, of a common system of different aircrafts, different maintenance events by the same operator, etc.) and based on the feedback examined prior to the most recent training of the systems. This provides a robust analysis model that can better determine situational information in a cost effective and efficient manner.

Also provided are the following illustrative, non-exhaustive examples of the subject-matter encompassed herein, which relate to:
A method for predictive maintenance in aircraft devices using machine learning-based models, the method comprising: accessing privately stored data for a plurality of clients from a central server; one or both of applying a surrogate model to the privately stored data to identify one or more anomalies within the privately stored data or applying a large language model (LLM) to the privately stored data to identify one or more records within the privately stored data associated with a component of an aircraft system; and determining a relationship between the one or more anomalies and the one or more records within the privately stored data to predict operational anomalies of an aircraft system.

The method described in the immediately preceding paragraph,, wherein the surrogate model is configured to be trained to emulate operation of an aircraft device of the aircraft system, the surrogate model configured to process sensor data to predict operational outputs of the aircraft device and to predict maintenance needs by identifying the one or more anomalies and deviations from expected operational behavior of the aircraft system.

The method described in the any of the two immediately preceding paragraphs, wherein the surrogate model is configured to be trained to predict the operational outputs using feature importance techniques or Shapley values to identify most relevant signals in the sensor data for predicting the operational outputs.

The method described in the first of the two immediately preceding paragraphs, further comprising training the surrogate model using advanced machine learning techniques, including one or more recurrent neural networks (RNNs), long short-term memory (LTSM) networks, or transformers to handle time-series of the sensor data.

The method described in the first of the three immediately preceding paragraphs, wherein the sensor data is configured to be received from sensors on the aircraft system, the sensor data including operational parameters used by the aircraft device for operational functions of the aircraft system.

The method described in the immediately preceding paragraph, wherein the operational parameters include one or more of temperatures, pressures, altitudes, airflows, measured vibrations, electric current, or voltage measurements.

The method described in the first of the three immediately preceding paragraphs, wherein the surrogate model is configured to be trained to predict operational anomalies of the aircraft system irrespective of changing operational variations and irrespective of changing environmental factors in which the aircraft system is operating.

The method described in any of the seven immediately preceding paragraphs, wherein the plurality of clients are airlines employing common aircraft models.

The method described in any of the eight immediately preceding paragraphs, wherein the privately stored data includes one or more instances of previous operational anomalies of another aircraft system.

The method described in any of the nine immediately preceding paragraphs, further comprising: obtaining sensed data associated with one or more real-time operating conditions of the component of the aircraft system from one or more sensors; and analyzing the sensed data based at least in part on the relationship between the one or more anomalies within the privately stored data and the one or more records within the privately stored data.

The method described in the immediately preceding paragraph, further comprising: identifying one or more anomalies in the sensed data based on the relationship between the one or more anomalies within the privately stored data and the one or more records within the privately stored data; and determining an anticipated failure time of the component of the aircraft system responsive to identifying the one or more anomalies in the sensed data.

The method described in the immediately preceding paragraph, further comprising determining a timeline associated with an expected operational unreliability of the component of the aircraft system based in part on the analysis of the sensed data, the timeline indicating the anticipated failure time of the component of the aircraft system.

The method described in the first of the two immediately preceding paragraphs, further comprising generating a maintenance alert responsive to determining the anticipated failure time of the component of the aircraft system, the maintenance alert configured to prompt scheduling of maintenance activities for the aircraft system.

The method described in the first of the two immediately preceding paragraphs, wherein the maintenance alert is generated based on a severity or a type of the one or more anomalies that are identified.

The method described in the first of the two immediately preceding paragraphs, further comprising communicating one or more of the maintenance alert or the anticipated failure time with an operator of the aircraft system.

The method described in the first of the six immediately preceding paragraphs, wherein the sensed data is configured to be obtained during a determined number of uses of the aircraft system.

A predictive maintenance system for predictive maintenance in an aircraft system using machine learning-based models, the predictive maintenance system comprising: a control unit having one or more processors configured to access privately stored data from a plurality of clients within a central server, wherein the control unit is configured to apply a surrogate model to the privately stored data to identify one or more anomalies within the privately stored data, the surrogate model configured to process the privately stored data to predict maintenance needs by identifying the one or more anomalies and deviations from expected operational behavior of the aircraft system, wherein the control unit is configured to apply a large language model (LLM) to the privately stored data to identify one or more records within the privately stored data associated with a component of the aircraft system, and wherein the control unit is configured to determine a relationship between the one or more anomalies and the one or more records within the privately stored data to predict operational anomalies of the aircraft system
A method for predicting maintenance of an aircraft system using a machine learning-based surrogate model and a large language model (LLM), the method comprising: accessing privately stored data for a plurality of clients within a central server; applying a surrogate model to the privately stored data to identify one or more anomalies within the privately stored data, the surrogate model configured to process the privately stored data to predict maintenance needs by identifying the one or more anomalies and deviations from expected operational behavior of the aircraft system; applying a large language model (LLM) to the privately stored data to identify one or more records within the privately stored data associated with a component of the aircraft system; determining a relationship between the one or more anomalies identified by the surrogate model and the one or more records within the privately stored data identified by the LLM to predict operational anomalies of the aircraft system; obtaining sensed data associated with one or more real-time operating conditions of the component of the aircraft system from one or more sensors; analyzing the sensed data based at least in part on the relationship between the one or more anomalies within the privately stored data and the one or more records within the privately stored data to identify one or more anomalies in the sensed data; and determining an anticipated failure time of the component of the aircraft system responsive to identifying the one or more anomalies in the sensed data.

The method described in the immediately preceding paragraph, further comprising generating a maintenance alert responsive to determining the anticipated failure time, the maintenance alert configured to prompt scheduling of maintenance activities for the aircraft system.

The method described in the immediately preceding paragraph, further comprising communicating one or more of the maintenance alert or the anticipated failure time with an operator of the aircraft system.

As used herein, a structure, limitation, or element that is "configured to" perform a task or operation is particularly structurally formed, constructed, or adapted in a manner corresponding to the task or operation. For purposes of clarity and the avoidance of doubt, an object that is merely capable of being modified to perform the task or operation is not "configured to" perform the task or operation as used herein.

It is to be understood that the above description is intended to be illustrative, and not restrictive. For example, the above-described examples (and/or aspects thereof) can be used in combination with each other. In addition, many modifications can be made to adapt a particular situation or material to the teachings of the various examples of the disclosure without departing from their scope. While the dimensions and types of materials described herein are intended to define the aspects of the various examples of the disclosure, the examples are by no means limiting and are exemplary examples. Many other examples will be apparent to those of skill in the art upon reviewing the above description. The scope of the various examples of the disclosure should, therefore, be determined with reference to the appended claims. In the appended claims and the detailed description herein, the terms "including" and "in which" are used as the plain-English equivalents of the respective terms "comprising" and "wherein." Moreover, the terms "first," "second," and "third," etc. are used merely as labels, and are not intended to impose numerical requirements on their objects.

This written description uses examples to disclose the various examples of the disclosure, including the best mode, and also to enable any person skilled in the art to practice the various examples of the disclosure, including making and using any devices or systems and performing any incorporated methods. The patentable scope of the various examples of the disclosure is defined by the claims, and can include other examples that occur to those skilled in the art. Such other examples are intended to be within the scope of the claims.

## Claims

1. A method for predictive maintenance in aircraft devices using machine learning-based models, the method comprising:
accessing privately stored data (206A-D) for a plurality of clients (204A-D) from a central server (202);
one or both of applying a surrogate model (104) to the privately stored data (206A-D) to identify one or more anomalies within the privately stored data (206A-D) or applying a large language model (LLM) (106) to the privately stored data (206A-D) to identify one or more records within the privately stored data (206A-D) associated with a feature of an aircraft system (502); and
determining a relationship between the one or more anomalies and the one or more records within the privately stored data (206A-D) to predict operational anomalies of the aircraft system (502).

2. The method of claim 1, wherein the surrogate model (104) is configured to be trained to emulate operation of an aircraft device of the aircraft system (502), the surrogate model (104) configured to process sensor data to predict operational outputs of the aircraft device and to predict maintenance needs by identifying the one or more anomalies and deviations from expected operational behavior of the aircraft system (502).

3. The method of claim 2, wherein the surrogate model (104) is configured to be trained to predict the operational outputs using feature importance techniques or Shapley values to identify most relevant signals in the sensor data for predicting the operational outputs.

4. The method of claim 2, further comprising training the surrogate model (104) using advanced machine learning techniques, including one or more recurrent neural networks (RNNs), long short-term memory (LTSM) networks, or transformers to handle time-series of the sensor data.

5. The method of claim 2, wherein the sensor data is configured to be received from sensors (508) on the aircraft system (502), the sensor data including operational parameters used by the aircraft device for operational functions of the aircraft system (502).

6. The method of claim 4, wherein the surrogate model (104) is configured to be trained to predict operational anomalies of the aircraft system (502) irrespective of changing operational variations and irrespective of changing environmental factors in which the aircraft system (502) is operating.

7. The method of claim 1, wherein the privately stored data (206A-D) includes one or more instances of previous operational anomalies of another aircraft system.

8. The method of claim 1, further comprising:
obtaining sensed data associated with one or more real-time operating conditions of the feature of the aircraft system (502) from one or more sensors (508); and
analyzing the sensed data based at least in part on the relationship between the one or more anomalies within the privately stored data (206A-D) and the one or more records within the privately stored data (206A-D).

9. The method of claim 8, further comprising:
identifying one or more anomalies in the sensed data based on the relationship between the one or more anomalies within the privately stored data (206A-D) and the one or more records within the privately stored data (206A-D); and
determining an anticipated failure time of the feature of the aircraft system (502) responsive to identifying the one or more anomalies in the sensed data.

10. The method of claim 9, further comprising determining a timeline associated with an expected operational unreliability of the feature of the aircraft system (502) based in part on the analysis of the sensed data, the timeline indicating the anticipated failure time of the feature of the aircraft system (502).

11. The method of claim 8, wherein the sensed data is configured to be obtained during a determined number of uses of the aircraft system (502).

12. The method of claim 1,
wherein the surrogate model (104) is configured to process the privately stored data (206A-D) to predict maintenance needs by identifying the one or more anomalies and deviations from expected operational behavior of the aircraft system (502);
the method further comprising:
obtaining sensed data associated with one or more real-time operating conditions of the feature of the aircraft system (502) from one or more sensors (508);
analyzing the sensed data based at least in part on the relationship between the one or more anomalies within the privately stored data (206A-D) and the one or more records within the privately stored data (206A-D) to identify one or more anomalies in the sensed data; and
determining an anticipated failure time of the feature of the aircraft system (502) responsive to identifying the one or more anomalies in the sensed data.

13. The method of claim 12, further comprising generating a maintenance alert responsive to determining the anticipated failure time, the maintenance alert configured to prompt scheduling of maintenance activities for the aircraft system (502).

14. The method of claim 13, further comprising communicating one or more of the maintenance alert or the anticipated failure time with an operator of the aircraft system (502).

15. A predictive maintenance system configured for predictive maintenance in an aircraft system (502) using machine learning-based models, the predictive maintenance system comprising a control unit (110) having one or more processors (214) configured to perform a method according to any of claims 1 - 14.
